# DEMANDE DE BREVET EUROPEEN

(11) **EP 1 593 538 A1**
(43) Date de publication de la demande: **09.11.2005**
(21) Numéro de dépôt: 05290911.6
(22) Date de dépôt: 25.04.2005
(51) Int. Cl.: B60J 10/00

(54) **Perfectionnements apportés aux joints d'étanchéité, notamment pour véhicules automobiles**

(30) Priorité: 05.05.2004 FR 0404826
(71) Demandeur: Metzeler Automotive Profile Systems Transieres, 92000 Nanterre (FR)
(72) Inventeur: Dron, Bernard, 92800 Puteaux (FR)
(74) Mandataire: Jolly, Jean-Pierre

(57) **Abrégé**

Dans ce profilé, les parties de la surface de la pince (1) ou d'une autre partie du joint destinées à être ou risquant de venir en contact avec une pièce métallique en saillie sont revêtues d'une mince couche (6) électriquement isolante en un matériau présentant des caractéristiques mécaniques différentes de celui de la pince, mais dont la résistance électrique est d'au moins 10⁶Ω/cm.

## Description

La présente invention concerne des perfectionnements apportés aux joints d'étanchéité, notamment pour véhicules automobiles, en vue de réduire les risques de corrosion des pièces métalliques qui sont à leur contact.

C'est à des joints pour véhicules automobiles que l'on se référera plus particulièrement ci-après, mais il apparaîtra clairement, même à des non-spécialistes de la technique considérée, que l'invention s'applique également, avec les mêmes avantages, à des joints utilisés dans d'autres domaines techniques, en particulier dans le bâtiment ou des ouvrages réalisés en atmosphère humide, polluée et/ou sale.

On sait que les joints d'étanchéité utilisés dans l'industrie automobile comprennent fréquemment une partie à section transversale en U formant pince, en un plastomère ou un élastomère, dans laquelle est souvent noyée une armature métallique ou en matière plastique destinée à accroître sa rigidité, cette pince venant coiffer une partie saillante de l'ouvrant, d'un encadrement de celui-ci ou d'une partie de la caisse.

Ces parties formant pinces sont solidaires de profilés destinés plus particulièrement à assurer l'étanchéité, à savoir soit un profilé tubulaire, attenant à une branche du U de la partie formant pince ou à la base de ce U, qui est comprimé entre l'ouvrant et son encadrement en position de fermeture de l'ouvrant, soit une ou plusieurs simple lèvres venant au contact des surfaces externes et internes d'une vitre coulissante du véhicule, le profilé étant alors dénommé « lécheur », soit encore un profilé à section en U inversé par rapport à celui de la partie formant pince et destiné à guider une vitre coulissante dans ses mouvements et à assurer son étanchéité en position de fermeture, ce profilé étant alors dénommé « coulisse ».

Bien que considérés comme électriquement isolants, les matériaux constitutifs de ces profilés, en particulier de la partie formant pince à section en U, sont légèrement conducteurs dans des conditions humides et peuvent être à l'origine de corrosions galvaniques nuisibles des métaux et alliages entrant dans la constitution du véhicule qui viennent à leur contact, qu'il s'agisse d'acier, d'acier galvanisé à l'aluminium ou même au magnésium.

Depuis un certain temps, les constructeurs d'automobiles imposent donc à leurs fournisseurs de profilés d'étanchéité des exigences sévères concernant les propriétés électriques de ces profilés et plus particulièrement leur conductivité.

Les normes imposées aux élastomères ou aux matériaux thermoplastiques communément utilisés dans la technique pour réaliser ces profilés sont toutefois difficiles à respecter, notamment dans le cas de caoutchoucs du type E.P.D.M., car des résistances supérieures à 10⁶ Ω/cm sont actuellement envisagées, ce qui se révèle très difficile à obtenir avec des caoutchoucs durs, par exemple d'une dureté Shore A égale ou supérieure à 80, qui sont normalement chargés en vue d'augmenter leur dureté.

Pour remédier à cet inconvénient, la Demanderesse est partie de la constatation que des élastomères ou des plastomères mous, c'est-à-dire d'une dureté inférieure à environ 60 Shore A, par exemple, et présentant la résistance électrique mentionnée ci-dessus, sont connus dans la technique et disponibles dans le commerce.

Elle propose donc de continuer à fabriquer les profilés d'étanchéité avec les matériaux, notamment les caoutchoucs, utilisés actuellement, qui présentent les caractéristiques mécaniques requises et connues, mais en les gainant localement, aux emplacements destinés à être ou risquant de venir au contact d'une surface métallique de la carrosserie, d'une mince couche d'un caoutchouc ou d'un matériau thermoplastique mou, voire cellulaire, inutilisable par lui-même pour réaliser le profilé désiré, mais présentant la résistance électrique souhaitée.

L'invention a par conséquent pour objet un profilé d'étanchéité, notamment pour véhicule automobile, comportant une partie à section transversale en U formant pince, apte à coiffer en la pinçant une pièce métallique en saillie, un organe d'étanchéité étant solidaire de la partie formant pince et faisant saillie vers l'extérieur à partir de celle-ci, la pince de ce profilé étant réalisée en un élastomère ou un plastomère présentant les caractéristiques requises pour son utilisation, ce profilé étant caractérisé en ce que les parties de la surface de la pince ou d'une autre partie du joint destinées à être ou risquant de venir en contact avec la pièce métallique en saillie ou une autre partie métallique sont revêtues d'une mince couche électriquement isolante en un matériau présentant des caractéristiques mécaniques différentes de celles du ou des autres constituants de la pince, mais dont la résistance électrique est d'au moins 10⁶ Ω/cm.

La couche revêtant les parties de la surface du profilé appelées à entrer en contact avec une partie métallique du véhicule pourra être relativement mince et de l'ordre de 0,5 mm à 1 mm.

Le matériau constitutif de cette couche isolante peut être un élastomère tel qu'un EPDM, un plastomère tel qu'un TPE (pour Thermo Plastique Elastomère), par exemple à base d'un polypropylène et d'un EPDM, ou qu'un TPV (pour Thermo Plastique Vulcanisé), par exemple à base d'un polypropylène et d'un EPDM vulcanisé, et en particulier un matériau cellulaire, dont la résistance électrique convient au but recherché ici et qui est facile à mettre en oeuvre.

Le matériau isolant et la pince peuvent être co-extrudés, de même que le ou les organes d'étanchéité proprement dits attenants à cette pince, ce qui rend facile et peu coûteuse la mise en oeuvre de l'invention.

Les dessins annexés illustrent diverses formes de réalisation de l'invention, dans le cas de joints d'étanchéité pour automobiles. Sur ces dessins :
La figure 1 est une vue en coupe transversale d'un joint d'étanchéité pour porte d'automobile ;
La figure 2 est une vue analogue d'un joint de coffre ;
La figure 3 est une coupe transversale d'un lécheur.

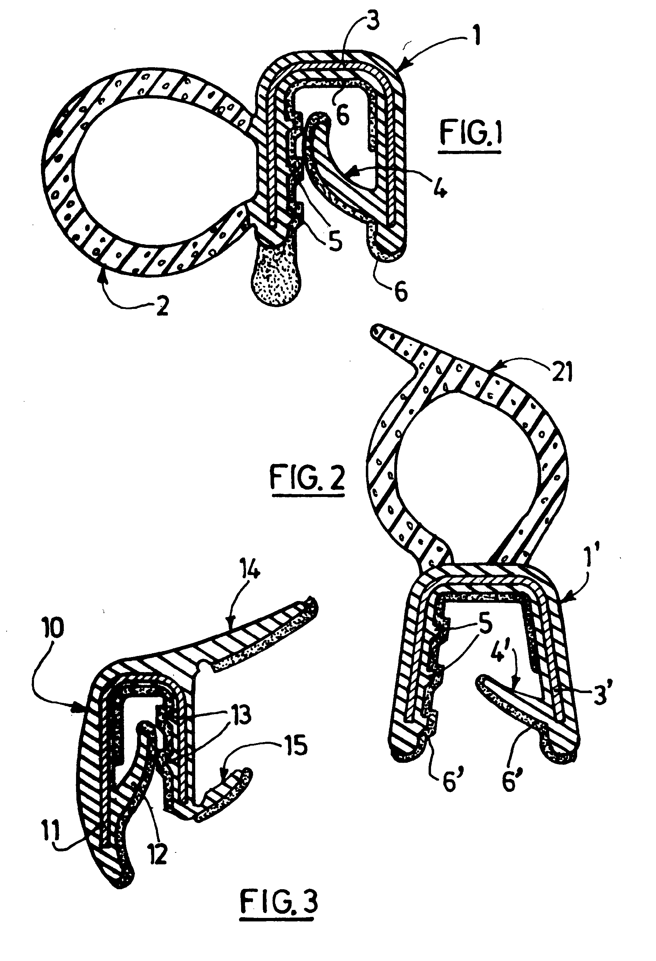

Le joint d'étanchéité pour porte d'automobile représenté sur la figure 1 comprend une partie formant pince 1, à section en U, destinée à coiffer une partie saillante métallique de l'encadrement de porte, et un profilé tubulaire d'étanchéité 2, attenant à une branche du U et faisant saillie vers l'extérieur à partir de la pince 1. La pince 1 et le profilé 2 sont réalisés conjointement par coextrusion.

La pince 1 est en un E.P.D.M., dans la masse duquel est noyée ici une armature métallique 3 de renfort à section en U, découpée ou ajourée.

De façon connue en soi, au moins une lèvre 4 faisant corps avec la pince 1 fait saillie à l'intérieur de celle-ci à partir de la branche non attenante à celle équipée de profilé tubulaire 2 et en direction de cette dernière. Des petites lèvres 5 font également saillie à partir de la branche équipée du profilé 2 en direction de la branche opposée. Les lèvres 4 et 5 sont destinées à rendre la pince 1 fermement solidaire de la partie saillante de l'encadrement de porte qu'elle coiffe et à éviter qu'elle ne s'en sépare éventuellement.

Le profilé tubulaire 2 est ici en caoutchouc cellulaire et est percé d'orifices mettant son volume interne en communication avec l'atmosphère ambiante.

L'E.P.D.M. dont est constituée la pince 1 est d'un type usuel, présentant les caractéristiques mécaniques requises pour cette application.

Conformément à l'invention, en vue d'éviter une corrosion d'origine galvanique de la pièce métallique coiffée par la pince 1, les parties de la surface de celle-ci appelées à être en contact avec la pièce métallique, à savoir la surface interne des branches de la pince, les lèvres 5 faisant saillie à partir de celle-ci et la surface de la lèvre 4 tournée vers la pièce métallique, sont gainées d'une mince couche d'un caoutchouc mou, dont les propriétés mécaniques médiocres ne se prêteraient pas à une utilisation pour réaliser le corps de la pince, mais qui présente une résistance électrique égale ici à environ 10⁷Ω/cm, qui en fait un excellent isolant.

Cette couche 6 peut être co-extrudée avec l'E.P.D.M. constituant la pince 1 et avec le caoutchouc cellulaire constituant le profilé tubulaire 2 et l'on peut ainsi réaliser, pour un coût à peine supérieur à celui d'un joint de porte usuel, un joint présentant des caractéristiques mécaniques comparables, mais qui évite ou réduit considérablement la corrosion galvanique de la feuillure métallique coiffée par la pince 1.

La surface extérieure de la partie tubulaire 2, qui, en position de fermeture de la porte est pincée entre cette porte et l'encadrement de porte, peut elle aussi être gainée localement d'une pellicule de caoutchouc mou à forte résistance électrique, mais le caoutchouc cellulaire dont elle est constituée est déjà résistant par lui-même et l'on peut généralement se dispenser de cette pellicule.

Sur la figure 2, qui représente un joint de coffre d'automobile conforme à l'invention, les pièces déjà décrites en relation avec la figure 1 sont désignées par les mêmes chiffres de référence affectés de l'indice'.

Dans ce joint de coffre, le profilé tubulaire 2' est attenant à la base du U de la pince 1' et fait saillie vers l'extérieur de celle-ci. Comme précédemment, la pince l'est réalisée en EPDM de qualité usuelle pour cette application et le profilé tubulaire est en caoutchouc cellulaire. Ces deux pièces sont réalisées par coextrusion. Comme dans le cas du joint de porte de la figure 1, une mince couche 6' d'un caoutchouc mou, mais à résistance électrique élevée, gaine localement les surfaces internes de la pince 1' et celles des lèvres 4' et 5' destinées à entrer en contact avec la pièce métallique que coiffe la pince 1, de manière à éviter toute corrosion galvanique de cette pièce métallique. La couche 6' est coextrudée avec la pince 1' et le profilé 2'.

Ici encore, le profilé tubulaire 2' peut lui aussi être éventuellement gainé localement, sur sa surface externe, d'une pellicule de caoutchouc mou à forte résistance électrique.

La figure 3 représente enfin un profilé du type dit « lécheur », comprenant une pince 10 en E.P.D.M., à section en U, renforcée par une armature métallique 11 et comprenant des lèvres internes 12' et 13' faisant saillie à partir de chacune des branches du U en direction de la branche opposée. Comme dans les réalisations précédentes, cette pince est destinée à coiffer ici une partie en saillie d'un encadrement de vitre coulissante, et elle comporte deux lèvres 14 et 15 qui font saillie à l'extérieur de la pince en direction de cette vitre, avec laquelle elles sont en contact. Les lèvres 14 et 15 font ici corps avec la pince, qui est réalisée en E.P.D.M.

Conformément à l'invention, les surfaces de la pince 10, y compris celles des lèvres 12 et 13 appelées à être en contact avec la partie saillante métallique équipée de la pince, et celles des lèvres 14 et 15, appelées à être en contact avec la porte du véhicule, sont revêtues d'une couche de caoutchouc cellulaire ayant des propriétés mécaniques médiocres, mais dont la résistance électrique est de l'ordre de 10⁸Ω/cm, afin d'éviter tout phénomène de corrosion galvanique.

L'invention n'est pas limitée, naturellement, aux formes de réalisation qui viennent d'être décrites et elle s'applique non seulement à tout autre type de joint d'étanchéité, notamment aux coulisses, aux joints de hayon des véhicules automobiles ou aux joints de bas de caisse, mais également à des joints d'étanchéité pour des bâtiments en atmosphère humide, sale ou polluée, et montés par exemple sur des cadres de baies en aluminium.

## Revendications

1. Profilé d'étanchéité, notamment pour véhicule automobile, comportant une partie (1, 1', 10) à section transversale en U formant pince, apte à coiffer en la pinçant une pièce métallique en saillie, un organe d'étanchéité (2, 2'; 14, 15) étant solidaire de la partie formant pince et faisant saillie vers l'extérieur à partir de celle-ci, la pince de ce profilé étant réalisée en un élastomère ou un plastomère présentant les caractéristiques requises pour son utilisation, ce profilé étant **caractérisé en ce que** les parties de la surface de la pince ou d'une autre partie du joint destinées à être ou risquant de venir en contact avec la pièce métallique en saillie sont revêtues d'une mince couche (6, 6' ; 16, 17, 18) électriquement isolante en un matériau présentant des caractéristiques mécaniques différentes de celui de la pince, mais dont la résistance électrique est d'au moins 10⁶Ω/cm.

2. Profilé selon la revendication 1, **caractérisé en ce que** la couche (6, 6' ; 16, 17, 18) de matériau isolant a une épaisseur d'environ 0,5 mm à 1 mm.

3. Profilé selon l'une des revendications 1 et 2, **caractérisé en ce que** le matériau isolant est un élastomère mou, notamment un EPDM.

4. Profilé selon l'une des revendications 1 et 2, **caractérisé en ce que** le matériau isolant est un plastomère de faible dureté, notamment un TPE (Thermo Plastique Elastomère) ou un TPV (Thermo Plastique Vulcanisé).

5. Profilé selon l'une des revendications 1 et 2, **caractérisé en ce que** le matériau isolant est un matériau cellulaire d'EPDM, de TPE ou de TPV.

6. Utilisation d'un profilé selon l'une des revendications 1 à 5 dans l'industrie automobile, notamment comme joint d'ouvrant, comme lécheur, comme coulisse, comme joint de hayon ou comme joint de caisse.

7. Utilisation d'un profilé selon l'une des revendications 1 à 6, dans l'industrie du bâtiment ou des travaux publics.
